(19) Europäisches Patentamt

European Patent Office

Office européen des brevets

(11) **EP 4 242 642 B1**

(12) **EUROPEAN PATENT SPECIFICATION**

(45) Date of publication and mention
of the grant of the patent:
**04.03.2026 Bulletin 2026/10**

(21) Application number: **23160788.8**

(22) Date of filing: **08.03.2023**

(51) International Patent Classification (IPC):
**G01N 21/90** *(2006.01)*        *B07C 5/34* *(2006.01)*

(52) Cooperative Patent Classification (CPC):
**G01N 21/90; G01N 21/9027; G01N 21/9036**

(54) **CONTAINER EXAMINATION APPARATUS**

BEHÄLTERUNTERSUCHUNGSVORRICHTUNG

APPAREIL D'EXAMEN DE RÉCIPIENTS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.03.2022 LU 501639**

(43) Date of publication of application:
**13.09.2023 Bulletin 2023/37**

(73) Proprietors:
• **Analitica d.o.o.**
  **1000 Ljubljana (SI)**
• **Univerza v Ljubljani**
  **1000 Ljubljana (SI)**

(72) Inventors:
• **PANGERSIC, Andrej**
  **1000 Ljubljana (SI)**
• **MILANIC, Matija**
  **1000 Ljubljana (SI)**
• **MAROLT, Matija**
  **1000 Ljubljana (SI)**
• **STERGAR, Jost**
  **1000 Ljubljana (SI)**

(74) Representative: **Zacco GmbH**
**Bayerstrasse 83**
**80335 München (DE)**

(56) References cited:
**EP-A1- 0 952 443           CN-A- 103 597 315
DE-A1- 102010 032 166   DE-A1- 19 514 271
DE-A1- 2 321 532            US-A1- 2015 293 031**

**Description**

## FIELD OF THE INVENTION

This disclosure relates to an apparatus for examining a container, in particular for detecting defects in a wall of the container.

## BACKGROUND

Pharmaceuticals and vaccines are frequently supplied in containers such as transparent vials, syringe barrels, ampoules, and the like. Defects in such containers can result in loss of integrity, leakage of the contents of the container and/or contamination of the contents of the container. It is therefore highly desirable that such containers are defect-free. It is in fact a requirement of many health authorities that suppliers of such medicinal products have adequate quality control procedures to ensure that as far as possible such containers are defect-free, although recognizing that defects detection remains probabilistic. The same requirements are gradually coming into force in food industry especially for glass containers such as bottles and storage jars which are prone to the same problems as the pharmaceutical containers. The defects of said containers are primarily of the following types: cracks, holes, air bubbles in material, scratches, and chipped walls. The term "crack" relates to any fissure in the material of the container that penetrates the thickness of the material partly or entirely through the container, e.g., partly, or entirely through the thickness of the wall of a container from either the exterior or interior.

A standard approach for inspection of optically transparent containers made of glass is X-ray inspection. Multiple companies (e.g., Mettler Toledo, Prisma) are producing such systems for quality control of glass containers used in different industries. However, the limitation of the X-ray inspection is that the container should contain adequate concentration of atoms with high atomic number (e.g. Si in case of glass) to obtain adequate contrast, the technique utilizes ionizing radiation. Therefore, special measures should be taken to protect the workers, and X-rays due to the high energy of the photons can affect sensitive content of the containers.

Apparatus and methods for detecting defects in optically transparent containers are known and often rely upon optical camera imaging. Such apparatus and methods are for example disclosed in WO-A2010/142718, where polarimetric imaging of a transparent article is performed to image stress in the article walls. US-A-2005/0117149 discloses an apparatus and method for crack detection in ampoules, bottles, and the like as used in the pharmaceutical industry based on optical methods. Similar apparatus utilizing polarimetric imaging for detecting a crack in an optically transparent article is presented in WO2017134086A1. An apparatus for inspection of transparent containers using the transmitted light is also described in CA1065436A. EP1106993B1 describes an inspection technique of sealing surface and container finish of an optically transparent container neck, also recording light transmitted through a transparent container region.

Apparatus and methods which use optical polarimetry to detect and analyse strain in transparent container walls are known. Such polarimetry strain detection methods are based on the so called "photoelasticity" effect that stress applied to a transparent material can cause the transparent material to become birefringent, i.e., the optical property of the material having a refractive index that depends on the polarization of light passing through the transparent material. The defects may introduce stress and consequently birefringence into a transparent material which can be detected by polarimetric imaging. Such apparatus and methods require transmission of light through the containers and cannot be used for detection of defects in optically transparent containers filled with non-transparent solid or scattering liquid contents.

An apparatus utilizing dark filed illumination for a glass substrate surface defect inspection is presented in KR101324015B1. The technique is based on detection of scattered light from the glass substrate defects. However, the apparatus works for flat glass substrate objects on conveyer belts and uses dark filed illumination source placed on one side of the glass object and cameras collecting scattered light on the other side of the glass object. Therefore, the glass object must be transparent for the apparatus to be able to image it. Similar apparatus is also described in CN102023164B.

Other relevant prior art includes EP 0952443 A1, which discloses a device for detecting defects in the neck and finish regions of a moulded bottle, and US 2015/293031 A1, which relates to the inspection of coatings in pharmaceutical containers.

The problem of defects detection in optically transparent containers filled with non-transparent solid contents is unsolved by prior art at a reliability level that would be satisfactory for high requirements of pharmaceutical and food industry. The reason is inability of reliable application of machine vision methods due to the random images of said containers which are caused by the randomly distributed non-transparent solid or scattering liquid contents. The machine vision algorithms analyse deviations from a standard image of a defect-free container, or they try to recognize repetitive patterns in images, which both turn out unreliable because of the random nature of the containers' images due to randomly distributed non-transparent solid or scattering contents. Optical light transmission detection methods cannot be applied either, due to the said non-transparent solid or scattering liquid container contents.

This invention aims at providing at least one method and apparatus for the examination of an at least partly optically transparent container to overcome the above mentioned deficiencies of the prior art and/or to provide an alternative to the examination procedures of at least partly transparent containers known in the state of the art. Other advantages of the invention will be apparent from the following description.

## SUMMARY

According to the invention, there is provided an apparatus for examining a container, in particular for detecting defects in a wall of the container, according to claim 1. The apparatus comprises:

a mount for supporting at least one container, which has a wall that is at least partially optically transparent, wherein the container is rotatable around an axis of rotation when the container is supported by the mount. The apparatus further comprises a first light source, a second light source and a third light source configured to respectively direct a first beam of incident light, a second beam of incident light and a third beam of incident light to illuminate a portion of the wall of the container. The apparatus further comprises a first optical sensor, a second optical sensor and a third optical sensor configured to receive a beam of reflected/scattered light from the wall of the container. The first light source is arranged with regard to the container such that the first beam of incident light is incident on the portion of the wall at a first incidence angle $\theta_{in}$, measured with respect to a surface normal on the portion of the wall, wherein the first incidence angle is at least approximately 90°, wherein optionally the first incidence angle is between 75° and 90° or between 60° and 90°, or between 59° and 90°. The the second light source is arranged with regard to the container such that the second beam of incident light is incident on the portion of the wall at a second incidence angle, measured with respect to a surface normal on the portion of the wall, wherein the second incidence angle is between 85° and 90°. The third light source is arranged with regard to the container such that the third beam of incident light is incident on the portion of the wall of the container at a third incidence angle, measured with respect to a surface normal on the portion of the wall, wherein the third incidence angle is at most 10°, preferably at most 5°, wherein the third beam of incident light is coherent light. The first optical sensor is arranged such that it is configured to receive a first beam of reflected/scattered light from the wall of the container wherein a first beam of reflected/scattered light at least approximately travels in a first direction, which is, in particular at least approximately, opposite to a direction of the first beam of incident light. The second optical sensor is arranged such that it is configured to receive a second beam of reflected/scattered light from the wall of the container, at a detection angle, measured with respect to a surface normal on the portion of the wall, wherein the detection angle is at most 5° or at most 10°. The third optical sensor is arranged such that it is configured to detect an interference pattern of reflected/scattered light from the wall of the container, in particular from an outer wall surface and an inner wall surface.

The first light source is configured to direct the first beam of incident light to illuminate the portion of the wall of the container. The first light source is preferably configured to direct a first beam of incident light to illuminate a portion of an exterior contour of the wall of the container. The first beam of reflected/scattered light originates from the first beam of incident light illuminating the portion of the wall of the container. For example, the first beam of incident light can be scattered by a defect in the wall, thereby causing the first beam of reflected/scattered light. The detection of the first beam of reflected/scattered light can be used to at least qualitatively identify the defect in the wall.

The second light source is configured to direct the second beam of incident light to illuminate the portion of the wall of the container. The second beam of reflected/scattered light originates from the second beam of incident light illuminating the portion of the wall of the container. For example, the second beam of incident light can be scattered by a defect in the wall, thereby causing the second beam of reflected/scattered light. The detection of the second beam of reflected/scattered light can be used to at least qualitatively identify the defect in the wall. This could be done in conjunction with the detection of the first beam of reflected/scattered light.

The third light source is configured to direct the third beam of incident light to illuminate the portion of the wall of the container. The third beam of reflected/scattered light originates from the third beam of incident light illuminating the portion of the wall of the container. For example, the third beam of incident light can be scattered by a defect in the wall, thereby causing the third beam of reflected/scattered light. The detection of the third beam of reflected/scattered light and/or of an interference pattern can be used to at least qualitatively identify the defect in the wall. This could be done in conjunction with the detection of the first and second beams of reflected/scattered light.

A first incidence angle $\theta_{in}$, measured with respect to a surface normal on the portion of the wall can be between 59° and 90°. A first incidence angle closer to a higher boundary of 90° allows for reducing or preventing multiple reflections of the light inside the container wall. The first incidence angle may be adjusted based on a geometry of the container.

An advantage of the apparatus is that it is a multimodal apparatus comprising a first sub-apparatus, a second sub-apparatus and a third sub-apparatus.

The first sub-apparatus comprises the first light source and the first optical sensor and allows for detecting defects in the wall of the container using a first imaging method. The first sub-apparatus allows for the first optical sensor to receive the first beam of reflected/scattered light, originated from the first beam of incident light illuminating the portion of the wall of the container, in the first direction, which is opposite to the direction of the first beam of incident light when there is at least a defect in the wall of the container.

The second sub-apparatus comprises the second light source and the second optical sensor and allows for detecting defects in the wall of the container using a second imaging method. The second sub-apparatus allows for the second optical sensor to receive the second beam of reflected/scattered light, originated from the second beam of incident light illuminating the portion of the wall of the container, at the detection angle of at most 5° or at most 10°, measured with respect to a surface normal on the portion of the wall, when there is at least a defect in the wall of the container.

The third sub-apparatus comprises the third light source and the third optical sensor and allows for detecting defects in the wall of the container using a third imaging method. The third sub-apparatus allows for the third optical sensor to detect the interference pattern of the reflected/scattered light, originated from the third beam of incident light illuminating the portion of the wall of the container, in particular from an outer wall surface and an inner wall surface, when there is at least a defect in the wall of the container.

Each of the first, the second and the third sub-apparatus using the respective first, the second and the third imaging method allows for detecting defects in the wall of the container in a reliable and accurate manner.

The apparatus which comprises the first, the second and the third sub-apparatus thus allows for detecting defects in the wall of the container using the respective first imaging method, the second imaging method and the third imaging method. Thus, the apparatus allows for detecting defects in the wall of the container in a very reliable and very accurate manner, as the apparatus allows for performing complementary imaging methods. Defect containers can be identified with a very high reliability, and it can be avoided also with a very high reliability that non-defect containers are falsely detected as defect. In both cases, the reliability can be higher than 90% or higher than 95%. For example, in pharmaceutical production which make use of containers filled with or to be filled with a medicament, usually only 2-3% false positives are acceptable, on the other hand false negatives are in the range of ppm (parts per million).

Another advantage of the apparatus is that it allows for examination of a filled container to detect defects in the wall of said container. The container may be filled with e.g. a non-transparent content, a non-transparent material or scattering liquids.

Yet another advantage of the apparatus is that it is easily upscalable to enable usage in the industry, e.g. the food industry or the pharmaceutical industry.

In some embodiments, each of the first beam of incident light, the second beam of incident light and the third beam of incident light has a respective wavelength which is different from the other two. Thereby, the different wavelengths of the first beam of incident light, the second beam of incident light and the third beam of the incident light may allow for separation of each of the first reflected/scattered light, the second reflected/scattered light, and the third reflected/scattered light from the other two. The separation of the reflected/scattered light in turn may facilitate detecting defects in the wall of the container in a reliable and accurate manner. For instance, the first beam of incident light may be a blue LED light with a wavelength of 405 nm. The second beam of incident light may be a green laser light with a wavelength of 532 nm. The third beam of incident light may be a red laser light with a wavelength of 650 nm.

In some embodiments, a lower boundary of the first incidence angle $\theta_{in}$ is obtained according to the following equation:

$$sin\,\theta_{in} = \frac{n_c}{n_m}\sqrt{1-cos^2\theta_c}$$

wherein $n_c$ is a refractive index of the container wall, wherein $n_m$ is a refractive index of a medium wherein the container wall is emerged therein, and wherein $\theta_c$ is an inner incidence angle of the first beam of incident light inside the wall of the container. In some embodiments, the first incidence angle $\theta_{in}$ is at most 90°.

The container may be emerged into a medium such as a liquid or a gas. The container may not be emerged into a medium. For instance, the container may be arranged in air. The inner incidence angle $\theta_c$ of the first beam of incident light inside the wall of the container may be obtained according to the following equation:

$$cos\,\theta_c = \frac{\sqrt{8\,dr\,r\,+\,(2\,r\,-\,dr)^2\,cos^2\theta_k}}{dr\,+\,2r}$$

wherein $d_r$ is a thickness of the container wall, wherein r is a mean radius of the container, and wherein $\theta_k$ is a critical angle on the inner wall surface of the container

In some embodiments, the first light source and the first optical sensor are arranged in close vicinity to one another. In some embodiments, the direction of the first beam of incident light and the first beam of reflected/scattered light enclose an angle of at most 20°, at most 10° or at most 5°.

The light, which is reflected/scattered at the surfaces of the walls of the container, is travelling mainly in the direction of the first beam of incident light. The light, which is reflected/scattered at the defects in the walls of the container can be detected in the other spatial directions, e.g. in the direction close to where the first beam of incident light is coming from.

In some embodiments, the first, the second or the third light source and/or the first, the second or the third optical sensor are/is arranged at a fixed position. Arranging the first light source, the second light source or the third light source and/or the first optical sensor, the second optical sensor or the third optical sensor at the fixed position may be beneficial as the container may be rotated by/with the mount, reducing the number of movable parts and facilitating the construction, usage and maintenance of the apparatus.

In some embodiments, a diameter of a spot of the first beam of incident light on the portion of the wall is equal to or larger than 1 cm. The spot of the beam preferably illuminates a larger portion of the wall along the axis of rotation, to examine a larger portion of the wall of the container. E.g. if the container has a cylindrical form, the first beam of incident light preferably illuminates the whole height of the wall of the container.

In some embodiments, a centre of the field-of-view of the second optical sensor is displaced from the centre of the illuminated portion of the wall of the container by a distance in the range between 1 mm and 3 mm, including the lower limit of 1 mm and the upper limit of 3 mm. This may reduce or prevent illumination and imaging (i.e. detecting light reflected from the container content with the optical sensor) of the container content.

In some embodiments, a divergence of the beam of incident light is smaller than 5° and/or a spot size of the beam of incident light on the portion of the wall of the container is smaller than 5 mm, preferably smaller than 2 mm. Reducing the divergence of the beam of incident light or reducing the spot size may improve the orthogonal illumination regarding the surface normal of the wall of the container as the beam hits the wall of the container more collimated and therefore more with a similar incidence angle.

In some embodiments, the apparatus further comprises a screen plate to project the interference pattern on the screen plate, wherein the third optical sensor is configured to detect the projected interference pattern. The screen plate may facilitate to detect the interference pattern as the screen plate may comprise a large screen to enable projection of the interference pattern. This may be advantageous compared to optically focussing the interference pattern directly onto the third optical sensor as there is no need for optical elements (e.g. lenses, etc.) close to the container to focus the interference pattern onto the optical sensor.

In some embodiments, a linear polarizer is arranged in front of the third optical sensor such that the reflected/scattered light passes through the polarizer. The light scattered from the container content changes polarization. By a proper orientation of the linear polarizer in front of the third optical sensor or the screen plate, the reflected/scattered light having a different polarization can be partially eliminated. This may result in less reflected/scattered light from defects having a different polarization on the third optical sensor and a better signal-to-noise ratio, i.e. reducing the noise from light having another polarization to improve the signal of the interference pattern and to facilitate detection of artefacts therein. This may increase the image contrast for wall defects.

In some embodiments, the apparatus further comprises an image processing system configured to process an electronic signal generated by the third optical sensor to determine whether a defect is present or absent in the wall of the container, wherein, in particular, a defect is detected by detecting a disturbance in or a loss of the interference pattern. The image processing system may process the electronic signal generated by the optical sensor, e.g. by implemented computer algorithms for image processing, and may interpret the electronic signal whether a defect is present or not.

In some embodiments, an optical bandpass filter is positioned in front of the second or third optical sensor, in particular between the container and a lens system arranged in front of the second or third optical sensor. In some embodiments the bandpass filter allows light at a wavelength of the second or the third beam of incident light to pass through the bandpass filter. Usage of a bandpass filter may increase the sensitivity of the optical sensor to the reflected/scattered light.

In some embodiments, the beam of incident light passes through a first polarizer and the reflected/scattered light from the portion of the wall passes through a second polarizer. In some embodiments, the second polarizer has a polarization axis which is orientated orthogonally to the polarization axis of the first polarizer. Using a predetermined polarization axis for both the incident light and the reflected/scattered light may facilitate to detect the reflected/scattered light, as the reflected/scattered light will have a different polarization axis than the incident light.

In some embodiments, the apparatus further comprises an imaging lens system for collecting the reflected/scattered light from the wall of the container onto the first or the second optical sensor, wherein, optionally, the imaging lens system has an F-number larger than 5.

In some embodiments, the apparatus further comprises an image processing system configured to process an electronic signal generated by the first or the second optical sensor in response to the light detected by the first or the second optical sensor to determine whether a defect is present or absent in the wall of the container. The image processing system may process the electronic signal generated by the optical sensor, e.g. by implemented computer algorithms for image processing, and may interpret the electronic signal whether a defect is present or not.

In some embodiments, the first or the second light source is a collimated light source and/or a laser, in particular a laser with a collimator. Utilization of collimated light may improve the detection of the defects in the container walls by improving the signal-to-noise-ratio.

In some embodiments, an optical element, such as a lens, in particular a convex lens or a cylindrical lens, or a slit, is arranged in front of the first, second or third light source to form the spot size of the beam of incident light to a predetermined spot size. Selecting a predetermined spot size may be advantageous to examine a container of a predetermined shape. In some embodiments, the pre-

determined spot size may be selected to cover the whole height of a container. This may reduce the examination time as the container does not have to be examined by multiple iterations at multiple heights. In some embodiments, the spot size may be selected depending on the properties of the wall of the container (e.g. thickness or material) to improve the examination method, e.g. to yield a better signal-to-noise ratio.

In some embodiments, the container is filled with a non-transparent material. The apparatuses as provided may examine a container, which is empty, filled with a transparent material or filled with a non-transparent material, offering an examination method for various types of containers.

In some embodiments, the first, the second or the third beam of incident light is elongated along the axis of rotation. In some embodiments, the elongation of the first, the second or the third beam of incident light may be large enough to cover the whole height of a container. This may reduce the examination time as the container does not have to be examined by multiple iterations at multiple heights.

## BRIEF DESCRIPTION OF THE DRAWINGS

These and other characteristics will become clear from the following description of illustrative embodiments, given as non-restrictive examples, with reference to the attached drawings, in which

Figure 1 is a first example of an apparatus for the examination of a container,
Figures 2a and 2b illustrate examples of the beam of incident light for the examination of a container according to the first example of the apparatus.
Figure 3 illustrates an example of the examination result of a container according to the first example of an apparatus,
Figure 4 illustrates a second example of an apparatus for the examination of a container,
Figures 5a and 5b illustrate examples of the beam of incident light for the examination of a container according to the second example of the apparatus.
Figure 6 illustrates an example of the examination result of a container according to the second example of an apparatus,
Figure 7 illustrates a third example of an apparatus for the examination of a container,
Figures 8a, 8b and 8c illustrate examples of the beam of incident light for the examination of a container according to the third example of the apparatus.
Figure 9 illustrates an example of the examination result of a container according to the third example of an apparatus,
Figures 10a,b to 21a,b illustrate examples of the examination results of containers according to the second example of an apparatus.

Figures 22a,b to 25a,b illustrate examples of the examination results of containers according to the third example of an apparatus.

## DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

Containers being at least partly made of an optically transparent material (e.g. glass or plastic) are used for storage of materials and goods, e.g. to enable a user to see what is inside said container. The container is usually required to not have any defects to prevent the stored materials and/or goods from leaving the container.

For example, pharmaceuticals and vaccines are frequently supplied in containers such as transparent vials, syringe barrels, ampoules, and the like. Defects in such containers can result in loss of integrity, leakage of the contents of the container and/or contamination of the contents of the container. It is therefore highly desirable that such containers are defect-free. It is in fact a requirement of many health authorities that suppliers of such medicinal products have adequate quality control procedures to ensure that as far as possible such containers are defect-free, although recognizing that defects detection remains probabilistic. The same requirements are gradually coming into force in food industry especially for glass containers such as bottles and storage jars which are prone to the same problems as the pharmaceutical containers. The defects of the said containers are primarily of the following types: cracks, holes, air bubbles in material, scratches, and chipped walls. The term "crack" relates to any fissure in the material of the container that penetrates the thickness of the material partly or entirely through the container, e.g., partly, or entirely through the thickness of the wall of a container from either the exterior or interior.

It as an aspect of the invention to provide an apparatus and a method for the examination of a container, in particular to detect defects in a wall of the container.

In some examples, the container may comprise content, which reflects/scatters light, such as non-transparent solid materials, scattering liquids or granules. This disclosures aims at providing a method for the examination of a container having a non-transparent content and/or providing alternatives to the state of the art method for the examination of a container having no or transparent contents.

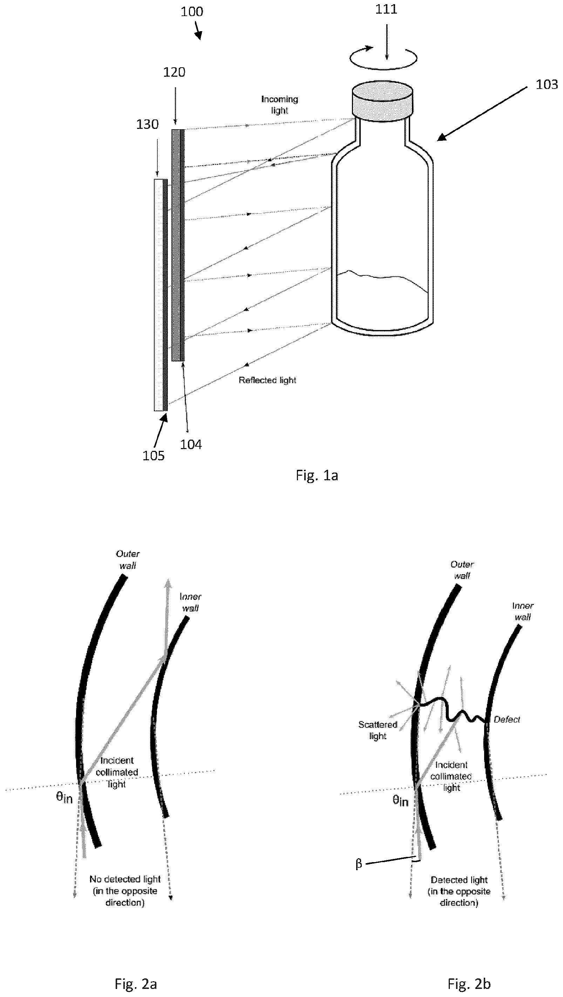

Figure 1 illustrates a first example of an apparatus 100 according to the invention, the apparatus comprising a mount for supporting at least one container 103. The container 103 has a wall, which is at least partially optically transparent. In some examples, the container 103 may be fully made of an at least partially optically transparent material, e.g. a transparent bottle or a transparent vial made of glass or plastic. In some examples, the container 103 may comprise a first wall, which is at least partially optically transparent and a second wall, which is not optically transparent. In some examples, the mount is designed to enable rotation of the container 103 around an axis of rotation 111, when the container 103 is supported by the mount. The mount may comprise means to fix the container 103 in a position relative to the mount, e.g. by comprising grabbing means or means for temporarily attaching the container 103 to the mount.

The apparatus 100 comprises a light source 120 configured to provide and to direct a beam of incident light to illuminate the container 103 supported by the mount. Preferably, the light source 120 directs the beam of incident light onto a wall of the container. More preferably, the light source 120 directs the beam of incident light onto an exterior contour of the wall of the container.

The light source 120 may comprise a collimated light source. The beam of incident light from the light source 120 illuminates a portion of the wall of the container. In some examples, the diameter of the spot of the beam of incident light on the portion of the wall of the container is equal to or larger than 1 centimetre. In some examples, the spot of the beam of incident light may have an elliptical shape or another non-circular shape and the diameter is to be understood as the width of the spot of the beam of incident light in the direction orthogonal to the axis of rotation, i.e. the spot of the beam of incident light may have a width of at least 1 centimetre in the direction orthogonal to the axis of rotation or in the direction in which the thickness of the portion of the wall is measured. In some examples, the light source may be a laser or a laser with a collimator. In some examples, the light source 120 may comprise multiple lasers with collimators to direct multiple beams of incident light in a predetermined pattern onto the container 103 to illuminate a larger portion of the wall of the container and to examine said larger portion of the wall of the container simultaneously to increase the speed of the examination of the container. In some examples, at least one optical element, such as a lens, in particular a convex lens or a cylindrical lens, or a slit, is arranged in front of the light source to form the spot size of the beam of incident light to a predetermined spot size. The predetermined spot size may e.g. have an elongated shape to cover a larger portion of the wall of the container. In some examples, the predetermined spot size may be varied depending on properties of the container, e.g. the thickness of the wall of the container or the material of the container. In some examples, the light source 120 may have an elongated shape to illuminate a larger portion of the wall of the container. Preferably, the light source 120 may be elongated along the axis of rotation as illustrated in Figure 1. In some examples, the light source 120 may comprise a light bar or another light source providing an elongated beam of light.

The apparatus 100 comprises an optical sensor 130 configured to receive a beam of reflected/scattered light from the wall of the container. The optical sensor 130 may be a camera. The optical sensor 130 may have an elongated shape. Preferably, the optical sensor has a similar shape as the light source 120 and the shape of the beam of incident light.

Figures 2a and 2b illustrate examples of a beam of incident light from the light source 120 (not shown in the Figures) illuminating a portion of the wall of the container. Figure 2a illustrates the beam of incident light illuminating a defect-free portion of the wall. The beam of incident light is refracted at the first outer surface of the wall of the container (the outer wall) and refracted/reflected again at the second inner surface of the wall of the container (the inner wall). As there is no defect in the wall of the container, the beam of reflected/scattered light is mainly travelling in the direction of incident beam of light, i.e. there is no backscattering and no reflected/scattered light travelling towards the bottom of Figure 2a. Figure 2b illustrates the beam of incident light illuminating a portion of the wall comprising a defect. The beam of incident light is refracted at the surface of the wall of the container (the outer wall) and is reflected/scattered when hitting the defect. The incident light is backscattered from the defect and a beam of the reflected/scattered light is travelling against the direction of the beam of incident light, i.e. is travelling towards the bottom of Figure 2b.

The optical sensor 130 may be arranged in a way that it can receive the beam of backscattered light. The beam of incident light and the beam of reflected/scattered light may be approximately overlapping, i.e. the beam of reflected/scattered light may at least approximately travel in a direction, which is opposite to the direction of the beam of incident light. The beam of incident light and the beam of reflected light enclose an angle $\beta$ as illustrated in Figure 2b, which may in some examples be at most 20°, at most 10° or at most 5°.

In other words, the centre of the light source 120 and the centre of the illuminated portion of the wall of the container may form a first line, which equals the optical axis of the beam of incident light. The centre of the optical sensor 130 and the centre of the illuminated portion of the wall of the container are forming a second line, which equals the optical axis of the beam of reflected/scattered light, in a way that the first and the second line are approximately parallel. In some examples, the first and the second line may have an intersection angle $\beta$ of at most 20°, at most 10° or at most 5°. The light source 120 and the optical sensor 130 may be arranged in close vicinity to one another as described above and as is shown in Figure 1.

Preferably, the beam of incident light illuminates the portion of the wall of the container at an angle $\theta_{in}$ close to 90° to the surface normal vector of said illuminated portion of the wall of the container to prevent multiple reflections of the light inside the container wall. The angle $\theta_{in}$ measured between a surface normal on the portion of the wall and the beam of incident light may for example be 80°. In another example, the angle $\theta_{in}$ may be between 75° and 90° or the angle $\theta_{in}$ may be between 60° and 90°. In some examples, the angle $\theta_{in\ may}$ be larger than 85°.

The reflected/scattered light is received by the optical sensor 130, which may give a signal, e.g. an electronic signal, depending on the received reflected/scattered light. In the example of Figure 2a, the optical sensor 130 does not receive reflected/scattered light, in the example of Figure 2b, the optical sensor 130 receives the reflected/scattered light. The apparatus 100 may comprise an image processing system, which processes the signal and determines whether a defect is present at the illuminated portion of the wall of the container 103.

The container 103 may be rotated relative to the light source 120 and the optical sensor 130, e.g. the container 103 may be rotated by the mount or the mount may be rotatable or the light source 120 and the optical sensor 130 may be mounted rotatably around the mount for the container. The container 103 is rotated in a specific rotation pattern, e.g. continuously rotated, whilst the light source 120 and the optical sensor 130 continuously illuminate the container and receive the reflected/scattered light. The defects in the walls of the container can be detected by abrupt and discontinuous changes in the intensity of the light, which is received by the optical sensor 130, when rotating the container 103. In another example, the container 103 is rotated in pre-determined rotational steps and the optical sensor 130 receives the reflected/scattered light at each rotational step allowing examination of the complete container walls. The rotational step size or the rotational speed may be selected based on the container size, the wall thickness or a requirement for the accuracy of the examination (e.g. requirements by law).

The mount or the light source 120 and the optical sensor 130 may be movable with respect to one another along the axis of rotation to enable to examine the container at different heights in case the beam of incident light does not cover the whole height of the container. The rotational step size, the rotational speed, the intensity of the incident light or the predetermined spot size may be selected depending on the height of the container, which is examined, e.g. the cylindrical body of a vial may be examined with other parameters compared to the bottleneck of the vial.

In some examples, the apparatus 100 may comprise a first and a second sub-system, each comprising a light source 120 and an optical sensor 130. In some examples, the first sub-system examines a first part of the container (e.g. the body and the bottom of the container) and the second sub-system examines a second part of the container (e.g. the neck and the shoulders of the container). In some examples, the first and the second sub-system may illuminate the container and receive the reflected/scattered light from the container from different angles enabling to take complementary stereoscopic images of the container.

The apparatus 100 may comprise a first polarizer 104 arranged so that the beam of incident light passes through the first polarizer 104 before illuminating a portion of the wall of the container. The apparatus 100 may comprise a second polarizer 105 arranged so that the reflected/scattered light from the portion of the wall passes through the second polarizer 105, wherein the second polarizer 105 has a polarization axis, which is orientated orthogonally to the polarization axis of the first polarizer 104. Orienting the polarization axes of the first and the second polarizer 104, 105 in an orthogonal orientation may eliminate specular reflections.

The apparatus 100 may comprise an imaging lens system for collecting reflected/scattered light from the portion of the wall onto the optical sensor 130. In some examples, the imaging lens system may have an F-number larger than 3. In some examples, the F-number of the imaging lens system may be larger than 5 or larger than 7.

Non-transparent solid contents inside the container often stick to the interior side of the container wall usually leads to optical effects similar to scattering in liquid contents inside the container. The apparatus 100 and the corresponding method of this invention observes only the portion of the transparent container wall on the edge of the projecting contour of the container 110. The beam of incident light and the reflected/scattered light are not interacting with the content inside the container 110 to eliminate the optical effects of the contents inside the container 110 and examining only the container's wall for defects.

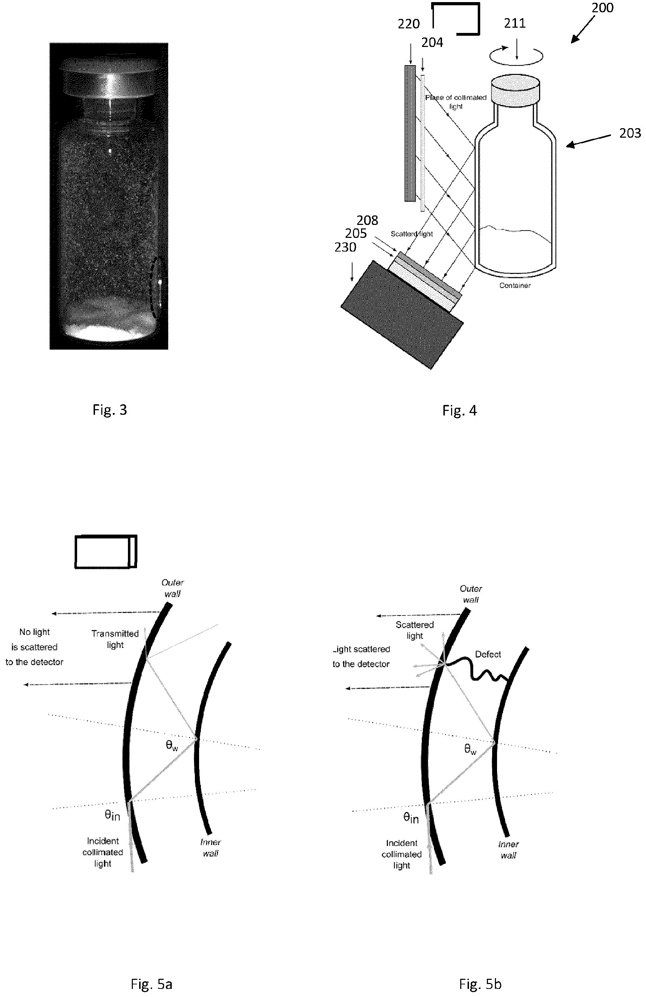

Figure 3 shows an example of an image obtained by a camera being the optical sensor 130 of the apparatus 100 at the examination of a container as described above. Marked with a red ellipse is a defect in the wall of the container, having a different intensity of reflected/scattered light compared to the intact wall of the container.

Figure 4 illustrates a second example of an apparatus 200 according to the invention, the apparatus comprising a mount for supporting at least one container 203. The container 203 has a wall, which is at least partially optically transparent. In some examples, the container 203 may be fully made of an at least partially optically transparent material, e.g. a transparent bottle or a transparent vial made of glass or plastic. In some examples, the container 203 may comprise a first wall, which is at least partially optically transparent and a second wall, which is not optically transparent. In some examples, the mount is designed to enable rotation of the container 203 around an axis of rotation 211, when the container 203 is supported by the mount. The mount may comprise means to fix the container 203 in a position relative to the mount, e.g. by comprising grabbing means or means for temporarily attaching the container 203 to the mount.

The apparatus 200 comprises a light source 220 configured to provide and to direct a beam of incident light to illuminate the container 203 supported by the mount. Preferably, the light source 220 directs the beam of incident light onto a wall of the container.

The light source 220 may comprise a collimated light source and/or a laser, in particular a laser with a collimator. In some examples, the light source 220 may comprise a highly directional or a collimated line light source, e.g. a laser with a line collimator. The beam of incident light from the light source 220 illuminates a portion of the wall of the container. In some examples, the light source 220 may comprise multiple lasers with collimators to direct multiple beams of incident light in a predetermined pattern onto the container 203 to illuminate a larger portion of the wall of the container and to examine said larger portion of the wall of the container simultaneously to increase the speed of the examination of the container 203. In some examples, at least one optical element, such as a lens, in particular a convex lens or a cylindrical lens, or a slit, is arranged in front of the light source to form the spot size of the beam of incident light to a predetermined spot size. Preferably, the spot size of the beam of incident light has a diameter smaller than 1mm to provide adequate localisation of the illuminated region. The predetermined spot size may e.g. have an elongated shape to cover a larger portion of the wall of the container. In some examples, the predetermined spot size may be varied depending on properties of the container, e.g. the thickness of the wall of the container or the material of the container. In some examples, the beam of incident light provided by the light source 220 may have an elongated shape to illuminate a larger portion of the wall of the container. Preferably, the beam of incident light provided by the light source 220 is elongated along the axis of rotation 211 as illustrated in Figure 4. In some examples, the light source 220 may comprise a light bar or another light source 220 providing an elongated beam of light.

Preferably, the light source 220 illuminates the wall of the container 203 at an incidence angle $\theta_{in}$ close to 90° to the surface normal of the portion of the wall of the container 203. In some examples, the incidence angle $\theta_{in}$ may be larger than 80°. In some examples, the incidence angle $\theta_{in}$ may be in the range of 85° to 90°. Preferably, the beam of incident light has a small divergence to illuminate the wall of the container in an incidence angle $\theta_{in}$ close to 90° over the whole illuminated portion of the wall of the container. The divergence of the beam of incident light can be reduced by inserting an optical element, e.g. a cylindrical convex lens or a narrow slit. In some examples, the divergence of the beam of incident light is smaller than 5°. In some examples, the spot size of the beam of incident light on the portion of the wall of the container, i.e. the diameter of the spot of the beam of incident light measured in a radial direction to the axis of rotation 211, is smaller than 5mm. Preferably the spot size of the beam of incident light on the portion of the wall of the container is smaller than 2mm.

The apparatus 200 comprises an optical sensor 230 configured to receive a beam of reflected/scattered light from the wall of the container. The optical sensor 230 may be a camera. The optical sensor 230 may have an elongated shape. Preferably, the field-of-view of the optical sensor 230 covers the whole container 203.

Preferably, the detection angle, i.e. the angle between the line of sight of the optical sensor 230 and the surface normal on the portion of the wall, is at most 10° or at most 5°. Preferably, the centre of the field-of-view of the optical sensor 230 is displaced from the illuminated portion of the wall by some distance away from the axis of rotation 211, e.g. in the range of 0.5mm to 5mm, e.g. in the range of 1mm to 3mm including the lower limit of 1mm and the upper limit of 3mm or for approximately 1mm, to prevent illumination and imaging of the container content.

The apparatus 200 may comprise an imaging lens system for collecting reflected/scattered light from the portion of the wall onto the optical sensor 230. In some examples, the imaging lens system may have an F-number larger than 3. In some examples, the F-number of the imaging lens system may be larger than 5 or larger than 7. The optical sensor 230 may comprise a bandpass filter 208 to increase the sensitivity. The bandpass filter 208 may be positioned in front of the optical sensor 230, in particular between the container 203 and the optional lens system arranged in front of the optical sensor 230, wherein the bandpass filter 208 allows light at a wavelength of the beam of incident light to pass through the bandpass filter.

Figures 5a and 5b illustrate examples of a beam of incident light from the light source 220 (not shown in the Figures) illuminating a portion of the wall of the container. Figure 5a illustrates the beam of incident light illuminating a defect-free portion of the wall at an angle $\theta_{in}$, which is close to 90°. The beam of incident light is refracted at the first outer surface of the wall of the container (the outer wall) and refracted/reflected again at the second inner surface of the wall of the container (the inner wall) at an angle $\theta_w$, which is close to the critical angle for total reflections. The light is trapped inside the container wall by means of multiple sequential total reflections at the inside surfaces of the wall of the container due to the difference in refraction index between the material of the optically transparent container wall and the surrounding air. As there is no defect in the wall of the container, the reflected/scattered light is mainly travelling in the direction of the incident beam of light, i.e. there is no backscattering and no reflected/scattered light travelling towards the bottom of Figure 5a. Figure 5b illustrates the beam of incident light illuminating a portion of the wall comprising a defect. The beam of incident light is refracted at the surface of the wall of the container (the outer wall), reflected again at the second inner surface of the wall of the container (the inner wall) at an angle $\theta_w$ and is reflected/scattered when hitting the defect.

The reflected/scattered light is received by the optical sensor 230, which may give a signal, e.g. an electronic signal, depending on the received reflected/scattered light. The apparatus 200 may comprise an image processing system, which processes the signal and determines whether a defect is present at the illuminated portion of the wall of the container 203.

The container 203 may be rotated relative to the light source 220 and the optical sensor 230, e.g. the container 203 may be rotated by the mount or the mount may be rotatable or the light source 220 and the optical sensor 230 may be mounted rotatably around the mount for the container. The container 203 is rotated in a specific rotation pattern, e.g. continuously rotated, whilst the light source 220 and the optical sensor 230 continuously illuminate the container and receive the reflected/scattered light. The defects in the walls of the container can be detected by abrupt and discontinuous changes in the intensity of the light, which is received by the optical sensor 230, when rotating the container 203. In another example, the container 203 is rotated in pre-determined rotational steps and the optical sensor 230 receives the reflected/scattered light at each rotational step allowing examination of the complete container walls. The rotational step size or the rotational speed may be selected based on the container size, the wall thickness or a requirement for the accuracy of the examination (e.g. requirements by law).

The mount or the light source 220 and the optical sensor 230 may be movable with respect to one another along the axis of rotation to enable to examine the container at different heights in case the beam of incident light does not cover the whole height of the container. The rotational step size, the rotational speed, the intensity of the incident light or the predetermined spot size may be selected depending on the height of the container, which is examined, e.g. the cylindrical body of a vial may be examined with other parameters compared to the bottleneck of the vial.

In some examples, the apparatus 200 may comprise a first and a second sub-system, each comprising a light source 220 and an optical sensor 230. In some examples, the first sub-system examines a first part of the container (e.g. the body and the bottom of the container) and the second sub-system examines a second part of the container (e.g. the neck and the shoulders of the container). In some examples, the first and the second sub-system may illuminate the container and receive the reflected/scattered light from the container from different angles. In some examples, the image processing system may combine the information of multiple rotational steps to provide a combined image comprising the complete information about defects in the examined container.

The apparatus 200 may comprise a first polarizer 204 arranged so that the beam of incident light passes through the first polarizer 204 before illuminating a portion of the wall of the container. The apparatus 200 may comprise a second polarizer 205 arranged so that the reflected/scattered light from the portion of the wall passes through the second polarizer 205, wherein the second polarizer 205 has a polarization axis, and the polarization axis of the beam of incident light determined by the polarization axis of the first polarizer 204 and the polarization axis of the second polarizer 205 are oriented in a way, that the contrast of the light scattered on the container defects is increased. The orientation of the polarizers 204,205 may be determined manually by trial and error or may be selected based on predetermined values. In some examples, the polarization axes of the polarizers 204,205 may be orthogonally oriented to one another.

According to the method presented with apparatus 200, the light is practically not entering the interior of the container 203, the reflection of incident light on the particles of non-transparent solid or scattering liquid contents of the container is highly diminished compared to the reflection of the incident light on the defects in the optically transparent container wall itself. An appropriate geometry of the apparatus enables that the light reflected or/and scattered on the defect exits the said container wall in the direction of the optical sensor at a different angle of rotation of the said container than the light possibly scattered at the multiple points of total reflection due to particles of the said non-transparent contents of the said container stuck to the interior of the said container wall as illustrated in Figure 4.

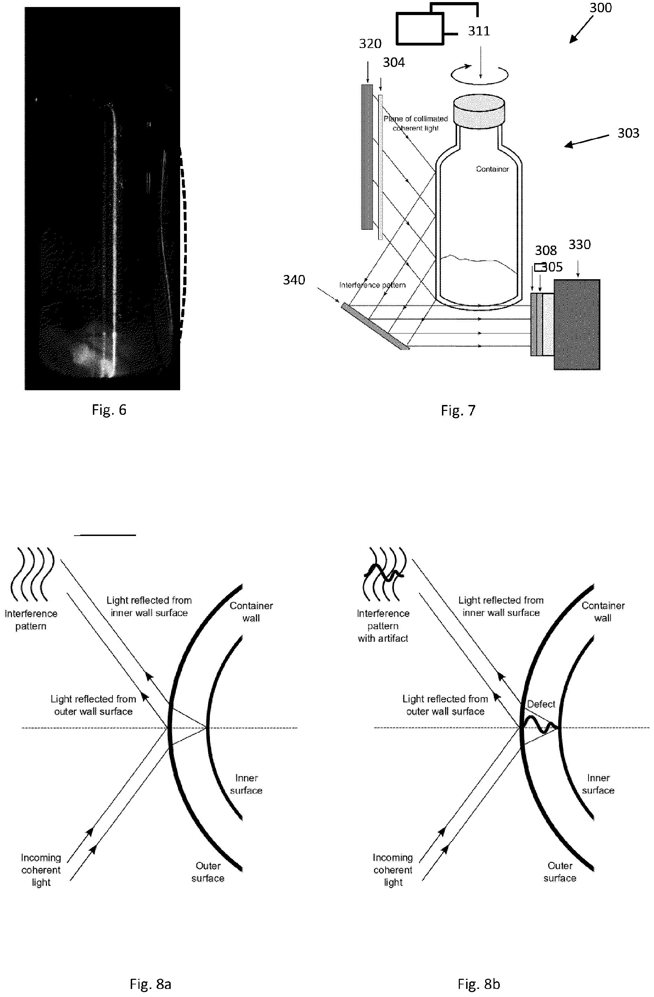

Figure 6 shows an example of an image obtained by a camera being the optical sensor 230 of the apparatus 200 at the examination of a container as described above. Marked with a red ellipse is a defect in the wall of the container, having a different intensity of reflected/scattered light compared to the intact wall of the container.

Figure 7 illustrates a third example of an apparatus 300 according to the invention, the apparatus comprising a mount for supporting at least one container 303. The container 303 has a wall, which is at least partially optically transparent. In some examples, the container 303 may be fully made of an at least partially optically transparent material, e.g. a transparent bottle or a transparent vial made of glass or plastic. In some examples, the container 303 may comprise a first wall, which is at least partially optically transparent and a second wall, which is not optically transparent. In some examples, the mount is designed to enable rotation of the container 303 around an axis of rotation 311, when the container 303 is supported by the mount. The mount may comprise means to fix the container 303 in a position relative to the mount, e.g. by comprising grabbing means or means for temporarily attaching the container 303 to the mount.

The apparatus 300 comprises a light source 320 configured to provide and to direct a beam of incident light to illuminate the container 303 supported by the mount. Preferably, the light source 320 directs the beam of incident light onto a wall of the container.

The light source 320 may comprise a coherent collimated light source and/or a laser, in particular a laser with a collimator. In some examples, the light source 320 may comprise a highly directional or collimated line light source, e.g. a laser with a line collimator. The beam of incident light from the light source 320 illuminates a portion of the wall of the container. In some examples, the light source 320 may comprise multiple lasers with collimators to direct multiple beams of incident light in a predetermined pattern onto the container 303 to illuminate a larger portion of the wall of the container and to examine said larger portion of the wall of the container simultaneously to increase the speed of the examination of the container 303. In some examples, at least one optical element, such as a lens, in particular a convex lens or a cylindrical lens, or a slit, is arranged in front of the light source to form the spot size of the beam of incident light to a predetermined spot size. The predetermined spot size may e.g. have an elongated shape to cover a larger portion of the wall of the container. In some examples, the predetermined spot size may be varied depending on properties of the container, e.g. the thickness of the wall of the container or the material of the container. In some examples, the beam of incident light provided by the light source 320 may have an elongated shape to illuminate a larger portion of the wall of the container. Preferably, the beam of incident light provided by the light source 320 is elongated along the axis of rotation 311 as illustrated in Figure 7.

Preferably, the light source 320 illuminates the wall of the container 303 at an incidence angle $\theta_{in}$ close to 0° to the surface normal of the portion of the wall of the container 303 to provide adequate transmittance of the light into the container wall to increase the contrast of the interference pattern. In some examples, the incidence angle $\theta_{in}$ may be at most 10°. In some examples, the incidence angle $\theta_{in}$ may be in the range of 5° to 10°. In some examples, the incidence angle $\theta_{in}$ may be at most 5°.

The apparatus 300 comprises an optical sensor 330 configured to receive a beam of reflected/scattered light from the wall of the container 303. The optical sensor 330 may be a camera. The optical sensor 330 may have an elongated shape. The interference pattern may be projected onto a screen plate 340 as illustrated in Figure 7 and the optical sensor 330 may be configured to detect the projected interference pattern on the screen plate 340. This may be advantageous as there is no need for optical elements (e.g. lenses or mirrors) close to the container 303 to focus the interference pattern onto the optical sensor 330. Instead, the optical elements required to enable the optical sensor 330 to detect the interference pattern on the screen plate 340 may be arranged close to the optical sensor 330. The apparatus 300 may comprise a first polarizer 304 arranged so that the beam of incident light passes through the first polarizer 304 before illuminating a portion of the wall of the container. The apparatus 300 may comprise a second polarizer 305 arranged so that the reflected/scattered light from the portion of the wall passes through the second polarizer 305, wherein the second polarizer 305 has a polarization axis, and the polarization axis of the beam of incident light determined by the polarization axis of the first polarizer 304 and the polarization axis of the second polarizer 305 are oriented in a way, that the contrast of the light scattered on the container defects is increased. By a proper orientation of the linear polarizer 305 in front of the optical sensor 330 or a screen plate 340 as introduced below, the reflected/scattered light having a different polarization can be partially eliminated. This may result in less reflected/scattered light from defects having a different polarization on the optical sensor 330 and a better signal-to-noise ratio, i.e. reducing the noise from light having another polarization to improve the signal of the interference pattern and to facilitate detection of artefacts therein. This may increase the image contrast for wall defects. The orientation of the polarizers 304,305 may be determined manually by trial and error or may be selected based on predetermined values. In some examples, the polarization axes of the polarizers 304,305 may be parallel to one another.

The apparatus 300 may comprise an imaging lens system for collecting reflected/scattered light from the portion of the wall onto the optical sensor 330. In some examples, the imaging lens system may have an F-number larger than 3. In some examples, the F-number of the imaging lens system may be larger than 5 or larger than 7. The optical sensor 330 may comprise a bandpass filter 308 to increase the sensitivity. The bandpass filter 308 may be positioned in front of the optical sensor 330, in particular between the container 303 and the optional lens system arranged in front of the optical sensor 330, wherein the bandpass filter 308 allows light at a wavelength of the beam of incident light to pass through the bandpass filter 308.

Figures 8a-8c illustrate examples of a beam of incident light from the light source 320 (not shown in the Figures) illuminating a portion of the wall of the container, wherein the incidence angle $\theta_{in}$ is strongly exaggerated for demonstration purposes. Figure 8a illustrates the beam of incident light illuminating a defect-free portion of the wall. The beam of incident light is both refracted and reflected at the first outer surface of the wall of the container and the refracted beam is reflected at the second inner surface of the wall of the container before being refracted at the first outer surface again. The beams reflected at the outer and the inner surface are preserving light coherence and are forming an interference pattern. As there is no defect in the wall of the container, the interference pattern does not comprise any artefacts. The interference pattern may be observed with the optical sensor 330. The interference pattern may be projected onto a screen plate 340 as illustrated in Figure 7 and the optical sensor 330 may be configured to detect the projected interference pattern on the screen plate 340. This may be advantageous as there is no need for optical elements (e.g. lenses or mirrors) close to the container 303 to focus the interference pattern onto the optical sensor 330. Instead, the optical elements required to enable the optical sensor 330 to detect the interference pattern on the screen plate 340 may be arranged close to the optical sensor 330.

Figure 8b illustrates the beam of incident light illuminating a portion of the wall comprising a defect. The beam of incident light is refracted and reflected at the surfaces of the wall of the container as described above, but due to the defect there is an artefact in the interference pattern.

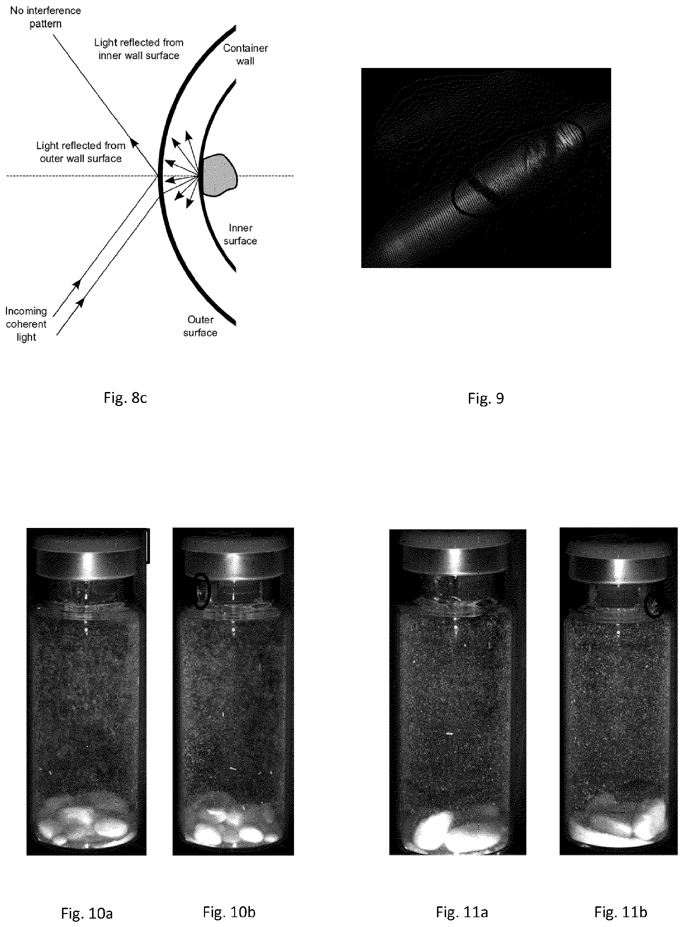

Figure 8c illustrates the beam of incident light illuminating a container 303 comprising non-transparent solid contents or scattering liquid contents. The light reflected at the non-transparent solid contents or scattering liquid contents loses coherence and therefore does not form an interference pattern. Thus, the interference patterns and this examination method are not affected by the said container non-transparent contents.

The reflected light is received by the optical sensor 330, which may give a signal, e.g. an electronic signal, depending on the received reflected/scattered light. The apparatus 300 may comprise an image processing system, which processes the signal and determines whether a defect is present at the illuminated portion of the wall of the container 303. Image processing algorithms of machine vision may be implemented in the image processing system to detect defects in the signal/image created by the optical sensor 330, thus detecting defects in the said container walls. The image processing algorithms may detect the defects in the container walls, e.g. by detecting a disturbance in or a loss of the interference pattern.

The container 303 may be rotated relative to the light source 320 and the optical sensor 330, e.g. the container 303 may be rotated by the mount or the mount may be rotatable or the light source 320 and the optical sensor 330 may be mounted rotatably around the mount for the container. The container 303 is rotated in a specific rotation pattern, e.g. continuously rotated, whilst the light source 320 and the optical sensor 330 continuously illuminate the container and receive the reflected/scattered light. The defects in the walls of the container can be detected by artefacts in the interference pattern, which is received by the optical sensor 330, when rotating the container 303. In some examples, the artefacts may be characterized by abrupt and discontinuous changes in the interference pattern. In another example, the container 303 is rotated in pre-determined rotational steps and the optical sensor 330 receives the reflected/scattered light at each rotational step allowing examination of the complete container walls. The rotational step size or the rotational speed may be selected based on the container size, the wall thickness or a requirement for the accuracy of the examination (e.g. requirements by law).

The mount or the light source 320 and the optical sensor 330 may be movable with respect to one another along the axis of rotation to enable to examine the container at different heights in case the beam of incident light does not cover the whole height of the container. The rotational step size, the rotational speed, the intensity of the incident light or the predetermined spot size may be selected depending on the height of the container, which is examined, e.g. the cylindrical body of a vial may be examined with other parameters compared to the bottleneck of the vial.

In some examples, the apparatus 300 may comprise a first and a second sub-system, each comprising a light source 320 and an optical sensor 330. In some examples, the first sub-system examines a first part of the container (e.g. the body and the bottom of the container) and the second sub-system examines a second part of the container (e.g. the neck and the shoulders of the container). In some examples, the first and the second sub-system may illuminate the container and receive the reflected/scattered light from the container from different angles. In some examples, the image processing system may combine the information of multiple rotational steps to provide a combined image comprising more complete information about defects in the examined container.

According to the method presented with apparatus 300, the method is not responsive to the contents inside the container 303, provided the refractive index of the container wall and the container contents are not equal. The method may defects in the wall of the container when there are non-transparent solid or scattering liquid contents inside the container 303. The effects in the interference patterns caused by the defects are highly non-linear. Therefore, the method itself is unreliable to categorize the magnitude or significance of the said defects and may not be sufficient for the purpose of classification of the said containers for scrap without combining it with an additional method. Further apparatuses and methods to overcome this deficiency will be presented below.

Figure 9 shows an example of an image obtained by a camera being the optical sensor 330 of the apparatus 300 at the examination of a container as described above. Marked with a red ellipse is an artefact in the interference pattern indicating a defect in the examined portion of the wall of the container 303.

Multiple of the presented apparatuses 100,200,300 may be combined to increase the accuracy of the examination of the container 103,203,303. The different methods provide complementary information about the container defects, which may improve the reliability, the accuracy and the details of information about the container defects.

A fourth apparatus and method may combine the apparatus 100 and 200. A fifth apparatus and method may combine the apparatus 100 and 300. A sixth apparatus and method may combine the apparatus 200 and 300. A seventh apparatus and method may combine the apparatus 100, 200 and 300. Preferably, an apparatus comprising a combination of multiple apparatuses 100, 200, 300 comprises a single mount for the container, which is to be examined, and at least one set of the light source 120, 220, 320 and the optical sensor 130, 230, 330 of the apparatuses 100, 200, 300, which are combined.

When combining multiple apparatuses 100, 200, 300 in a single apparatus, each of the apparatuses may use a different wavelength, to enable to separate the signals of each illumination and detection method, e.g. blue light of 405nm wavelength, green light of 532nm wavelength and red light of 650nm wavelength may be used for the different apparatuses 100, 200, 300. The apparatuses 100, 200, 300 may examine the same portion of the container 103, 203, 303 at the same rotational step or each apparatus 100, 200, 300 may examine another portion of the container 103, 203, 303 simultaneously. The image processing system may combine the images of each of the rotational steps as the portions of the container 103, 203, 303, which is examined at each of the rotational step of each of the apparatuses 100, 200, 300 is known. Thereby the information of each of the apparatuses 100, 200, 300 may be combined for each rotational step, even when the apparatuses 100, 200, 300 are not examining the same portion of the wall of the container 103, 203, 303 at the same rotational step.

In some examples, the apparatus may comprise multiple light sources 120, 220, 320 and optical sensors 130, 230, 330 according to one of the apparatuses 100, 200, 300, e.g. there may be two sets of each of the light sources 120, 220 and optical sensors 130, 230 when combining the apparatuses 100 and 200.

The generated signal from the optical sensors 130, 230, 330 may be processed by an image processing system, which utilizes an image processing computer algorithm to detect the said defects in optically transparent containers with non-transparent solid or scattering liquid contents. The algorithm may use a ResNet-based deep neural network trained on a manually annotated dataset of defect examples to identify the said defects in the input signal. The network may jointly process signals from all optical sensors 130, 230, 330 and several consecutive time instances or rotational steps to yield likelihood of the said defects. The likelihood is thresholded with an adjustable threshold that can be optimized according to the desired balance between specificity and false reject rate. If the likelihood exceeds the threshold, the container 103, 203, 303 is marked as defected.

The image processing system may be a conventional digital processing system able to process the electronic signal generated by the optical sensor such as an electronic camera in response the received light to thereby generate an indication to a user of the presence or absence of a defect in the optically transparent container. The image processing system may for example be or include a computer. The image processing system may for example generate a visual indication of the presence of a defect in the optically transparent container, for example displayed on a screen visible to a human viewer, and/or the image processing system may be adapted to further process the electronic signal and indicate the presence of a defect in the optically transparent container by for example an electronic, audible or visual warning.

The image processing system may be connected to a control system, preferably an electronic processing system, for controlling an operation involving one or more optically transparent containers. The control system can be adapted to halt the operation relating to the optically transparent container, or to divert the optically transparent container from such an operation to for example a reject location if there is an indication of a defect in the container.

The apparatus and method is not limited to analysing only one said container within a single image, but algorithmic processing can be analogously used to analyse a single container in an image by predefining the areas of the individual containers in the image (e.g., by defining regions of interest).

The container 103, 203, 303 may have a cylindrical shape or may be cylindrically symmetrical. In this case, the mount is preferably enabling a rotation around the cylindrical axis of the container 103, 203, 303 to enable the beam of incident light to pass along all radial directions around the rotation axis. This enables the beam of incident light to illuminate the entire cross section of the container 103, 203, 303 so that a defect can be located anywhere in the wall of the container 103, 203, 303. The light source 120, 220, 320 and/or the optical sensor 130, 230, 330 may be arranged at a fixed position, i.e. a position fixed relative to the location of the mount so that the container 103, 203, 303 is moved relative to the light source 120, 220, 320 and the optical sensor 130, 230, 330.

Containers such as vials, ampoules, bottles, storage jars, and the like are typically manufactured and/or processed e.g., filled, at a high speed, typically up to 600 pieces per minute. Suitably the apparatus of the invention is constructed, and the method of the invention is operated to process the containers at this speed. Suitable feed machinery to feed the containers to the apparatus of the invention will be apparent to those skilled in the art.

Therefore, in an embodiment the apparatus further comprises a conveyor adapted to feed plural sequential containers to the apparatus of the present invention, to load the containers onto the mount(s) of the apparatus of the invention, and to subsequently remove the containers from the mount(s) after the apparatus of the invention has operated, and then to convey the containers for further processing. For example, such a conveyor may comprise a rotating carousel.

The apparatus of this invention may also comprise one or more optical elements to direct, e.g., guide, light from the light source 120, 220, 320 through the polarizers 4, 204, 205, 304, 305 to the optically transparent container 103, 203, 303 and to the optical sensor 130, 230, 330. Such one or more light guides may for example comprise one or more mirror, optical fibre, lens, collimator, as conventional in the field of optics.

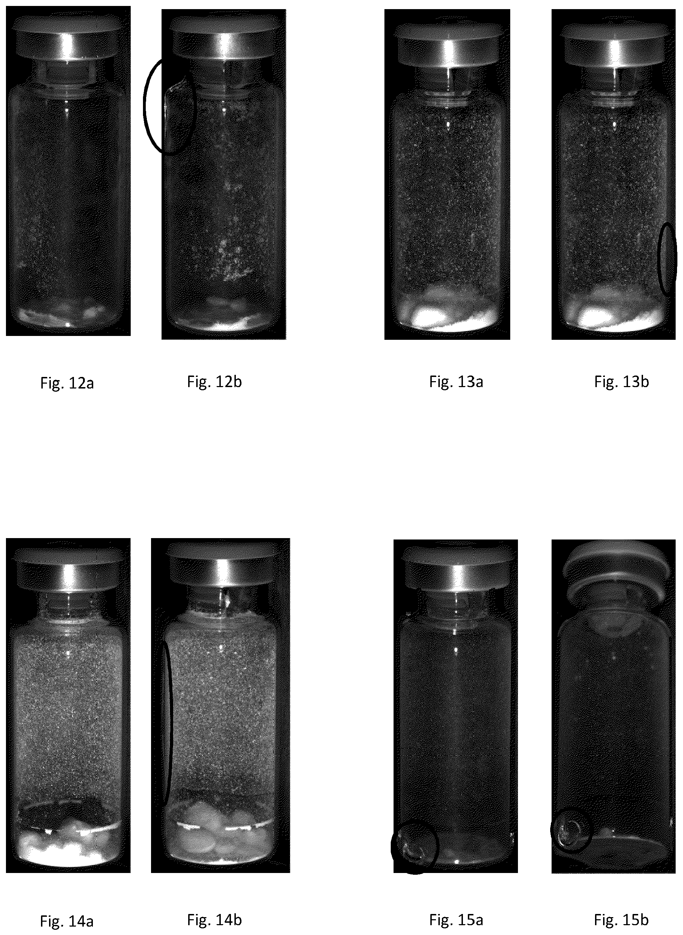

Figures 10a,b to 14a,b are showing examples of images of a container 103, which is examined with an apparatus 100 and the according method as described above. In the images labelled with a, there is no defect present, in the images labelled with b, the defect is highlighted with a red ellipse.

Figure 10b is showing a crack on the neck of the container 103.

Figure 11b is showing a chip on the neck of the container 103.

Figure 12b is showing a crack on the shoulder and the body of the container 103.

Figure 13b is showing a crack on the body of the container 103.

Figure 14b is showing a scratch on the body of the container 103.

Figures 15a and 15b are showing a chip on the bottom of the container 103 examined by an apparatus 100 comprising two optical sensors 130. The stereoscopic imaging of the container 103 utilizing two optical sensors 130 may improve the examination of the container 103 and increase the accuracy and reliability of the examination method.

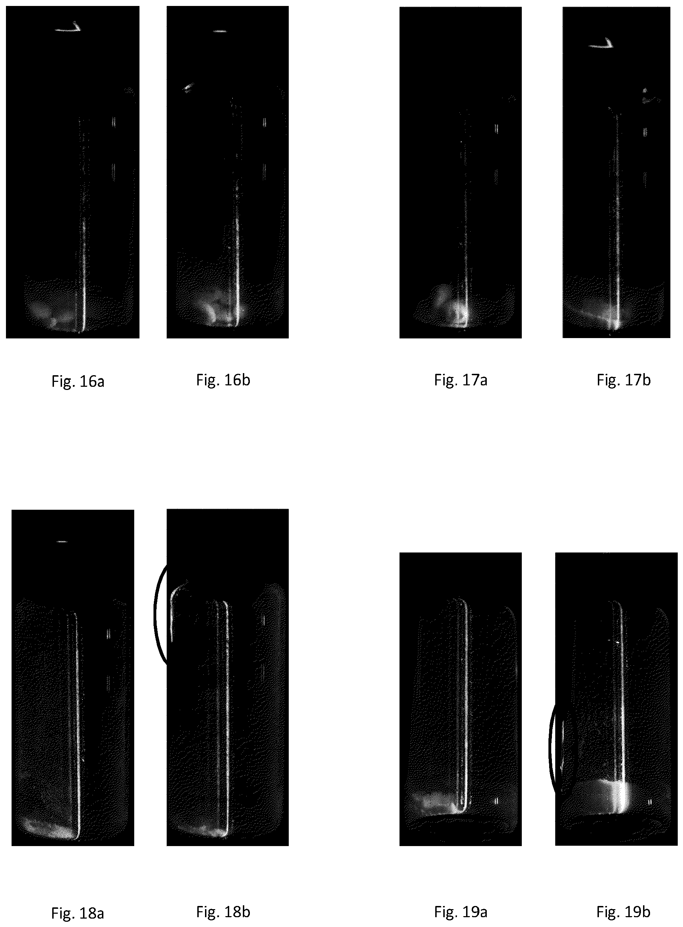

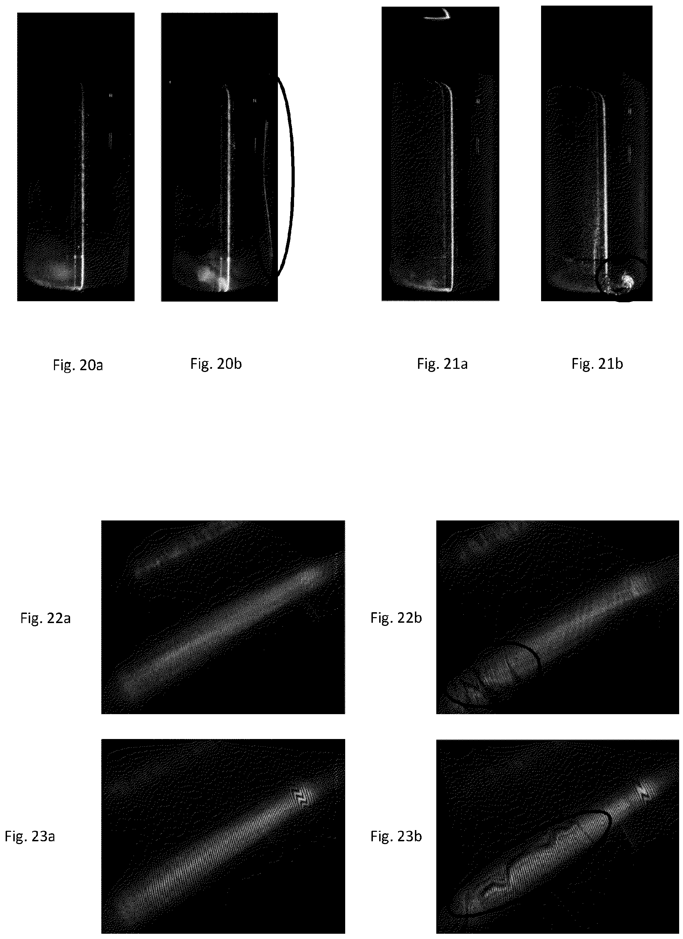

Figures 16a,b to 21a,b are showing examples of images of a container 203, which is examined with an apparatus 200 and the according method as described above. In the images labelled with a, there is no defect present, in the images labelled with b, the defect is highlighted with a red ellipse.

Figure 16b is showing a crack on the neck of the container 203.

Figure 17b is showing a chip on the neck of the container 203.

Figure 18b is showing a crack on the shoulder and body of the container 203.

Figure 19b is showing a crack on the body of the container 203.

Figure 20b is showing a scratch on the body of the container 203.

Figure 21b is showing a chip on the bottom of the container 203.

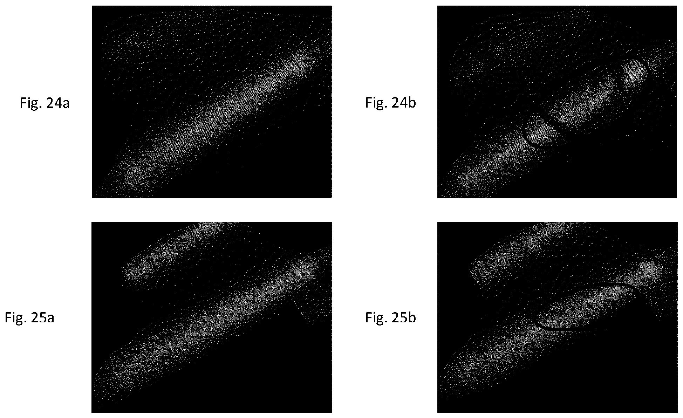

Figures 22a,b to 25a,b are showing examples of images of a container 303, which is examined with an apparatus 300 and the according method as described above. In the images labelled with a, there is no defect present, in the images labelled with b, the defect is highlighted with a red ellipse.

Figure 22b is showing a crack on the bottom of the container 203.

Figure 23b is showing a crack on the body of the container 203.

Figure 24b is showing a scratch on the body of the container 203.

Figure 25b is showing another example of a scratch on the body of the container 203.

**Claims**

1. An apparatus (100, 200, 300) for examining a container (103, 203, 303), in particular for detecting defects in a wall of the container (103, 203, 303), the apparatus (100, 200, 300) comprising:

   a mount for supporting at least one container (103, 203, 303), which has a wall that is at least partially optically transparent, wherein the container (103, 203, 303) is rotatable around an axis of rotation (111, 211, 311) when the container (103, 203, 303) is supported by the mount,
   a first light source (120), a second light source (220) and a third light source (320) configured to respectively direct a first beam of incident light, a second beam of incident light and a third beam of incident light to illuminate a portion of the wall of the container (103, 203, 303),
   a first optical sensor (130), a second optical sensor (230) and a third optical sensor (330) configured to receive a beam of reflected/scattered light from the wall of the container (103, 203, 303),
   wherein the first light source (120) is arranged with regard to the container (103) such that the first beam of incident light is incident on the portion of the wall at a first incidence angle $\theta_{in}$, measured with respect to a surface normal on the portion of the wall, wherein the first incidence angle is at least approximately 90°, wherein optionally the first incidence angle is between 75° and 90° or between 60° and 90°, or between 59° and 90°,
   wherein the second light source (220) is arranged with regard to the container (203) such that the second beam of incident light is incident on the portion of the wall at a second incidence angle, measured with respect to a surface normal on the portion of the wall, wherein the second incidence angle is between 85° and 90°,
   wherein the third light source (320) is arranged with regard to the container (303) such that the third beam of incident light is incident on the portion of the wall of the container (303) at a third incidence angle, measured with respect to a surface normal on the portion of the wall, wherein the third incidence angle is at most 10°, preferably at most 5°, wherein the third beam of incident light is coherent light,
   wherein the first optical sensor (130) is arranged such that it is configured to receive a first beam of reflected/scattered light from the wall of the container wherein a first beam of reflected/scattered light at least approximately travels in a first direction, which is opposite to a direction of the first beam of incident light,
   wherein the second optical sensor (230) is arranged such that it is configured to receive a second beam of reflected/scattered light from the wall of the container (203), at a detection angle, measured with respect to a surface normal on the portion of the wall, wherein the detection angle is at most 5° or at most 10°, and wherein the third optical sensor (330) is arranged such that it is configured to detect an interference pattern of reflected/scattered light from the wall of the container (303), in particular from an outer wall surface and an inner wall surface.

2. The apparatus (100) according to claim 1, wherein each of the first beam of incident light, the second beam of incident light and the third beam of incident light has a respective wavelength which is different from the other two.

3. The apparatus (100) according to claim 1 or 2, wherein a lower boundary of the first incidence angle $\theta_{in}$ is obtained according to the following equation:

$$sin\ \theta_{in} = \frac{n_c}{n_m}\sqrt{1-cos^2\theta_c}$$

wherein $n_c$ is a refractive index of the container wall, wherein $n_m$ is a refractive index of a medium wherein the container wall (103) is emerged therein, and wherein $\theta_c$ is an inner incidence angle of the first beam of incident light inside the wall of the container, wherein the first incidence angle $\theta_{in}$ is at most 90°.

4. The apparatus (100) according to any of the preceding claims, wherein the first light source (120) and the first optical sensor (130) are arranged in close vicinity to one another and wherein the direction of the first beam of incident light and the first beam of reflected/scattered light enclose an angle of at most 20°, at most 10° or at most 5°.

5. The apparatus (100) according to any one of the preceding claims, wherein a diameter of a spot of the first beam of incident light on the portion of the wall is equal to or larger than 1 cm.

6. The apparatus (200) according to any of the preceding claims, wherein a centre of a field-of-view of the second optical sensor (230) is displaced from the centre of the illuminated portion of the wall of the container away from the axis of rotation (211) by a distance in the range between 1 mm and 3 mm, including the lower limit of 1 mm and the upper limit of 3 mm.

7. The apparatus (200) according to any of the preceding claims, wherein a divergence of the second beam of incident light is smaller than 5° and/or a spot size of the second beam of incident light on the portion of the wall of the container (203) is smaller than 5 mm, preferably smaller than 2 mm.

8. The apparatus (300) according to any of the preceding claims, further comprising a screen plate (340) to project the interference pattern on the screen plate (340), wherein the third optical sensor (330) is configured to detect the projected interference pattern and/or wherein a linear polarizer (305) is arranged in front of the third optical sensor (330) such that the reflected/scattered light passes through the polarizer (305).

9. The apparatus (300) according to any of the preceding claims, further comprising an image processing system configured to process an electronic signal generated by the third optical sensor (330) to determine whether a defect is present or absent in the wall of the container (303), wherein, in particular, a defect is detected by detecting a disturbance in or a loss of the interference pattern.

10. The apparatus (200,300) according to any of the preceding claims, wherein an optical bandpass filter (208,308) is positioned in front of the second or third optical sensor (230,330), in particular between the container (203,303) and a lens system arranged in front of the second or third optical sensor (230,330), wherein the bandpass filter (208,308) allows light at a wavelength of the second or the third beam of incident light to pass through the bandpass filter (208,308).

11. The apparatus (100,200) according to any of the preceding claims, wherein the beam of incident light passes through a first polarizer (104,204) and the reflected/scattered light from the portion of the wall passes through a second polarizer (105,205), wherein the second polarizer (105,205) has a polarization axis which is orientated orthogonally to the polarization axis of the first polarizer (104,204).

12. The apparatus (100,200) according to any of the preceding claims, further comprising an imaging lens system for collecting the reflected/scattered light from the wall of the container onto the first or the second optical sensor (130,230), wherein, optionally, the imaging lens system has an F-number larger than 5.

13. The apparatus (100,200) according to any of the preceding claims, further comprising an image processing system configured to process an electronic signal generated by the first or second optical sensor (130,230) in response to the light detected by the first or second optical sensor (130,230) to determine whether a defect is present or absent in the wall of the container (103,203) and/or
wherein the first or the second light source (120,220) is a collimated light source and/or a laser, in particular a laser with a collimator.

14. The apparatus (100,200,300) according to any of the preceding claims, wherein the first light source, the second light source or the third light source (120,220,320) and/or the first optical sensor, the second optical sensor or the third optical sensor (130,230,330) are/is arranged at a fixed position and/or
wherein an optical element, such as a lens, in particular a convex lens or a cylindrical lens, or a slit, is arranged in front of the first, second or third light source (120,220,320) to form the spot size of the beam of incident light to a predetermined spot size.

15. The apparatus (100,200,300) according to any of the preceding claims, wherein the first, the second or the third beam of incident light is elongated along the axis of rotation (111,211,311).

**Patentansprüche**

1. Einrichtung (100, 200, 300) zum Untersuchen eines Behälters (103, 203, 303), insbesondere zum Detektieren von Defekten in einer Wand des Behälters (103, 203, 303), wobei die Einrichtung (100, 200, 300) umfasst:

    eine Halterung zum Tragen von mindestens einem Behälter (103, 203, 303), der eine Wand aufweist, die zumindest teilweise optisch durchsichtig ist, wobei der Behälter (103, 203, 303), wenn der Behälter (103, 203, 303) von der Halterung getragen wird, um eine Rotationsachse (111, 211, 311) drehbar ist,
    eine erste Lichtquelle (120), eine zweite Lichtquelle (220) und eine dritte Lichtquelle (320), die dazu ausgestaltet sind, einen ersten Strahl von einfallendem Licht, einen zweiten Strahl von einfallendem Licht und einen dritten Strahl von einfallendem Licht jeweils so auszurichten, dass ein Teil der Wand des Behälters (103, 203, 303) beleuchtet wird,
    einen ersten optischen Sensor (130), einen zweiten optischen Sensor (230) und einen dritten optischen Sensor (330), die dazu ausgestaltet sind, einen Strahl von Licht zu empfangen, das von der Wand des Behälters (103, 203, 303) reflektiert/gestreut wird,
    wobei die erste Lichtquelle (120) in Bezug auf den Behälter (103) so angeordnet ist, dass der erste Strahl von einfallendem Licht unter einem ersten Einfallswinkel $\theta_{in}$ auf den Teil der Wand eintrifft, gemessen in Bezug auf eine Oberflächennormale des Teils der Wand, wobei der erste Einfallswinkel mindestens ungefähr 90° beträgt, wobei der erste Einfallswinkel optional zwischen 75° und 90° oder zwischen 60° und 90° bzw. zwischen 59° und 90° liegt,
wobei die zweite Lichtquelle (220) in Bezug auf den Behälter (203) so angeordnet ist, dass der zweite Strahl von einfallendem Licht unter einem zweiten Einfallswinkel auf den Teil der Wand eintrifft, gemessen in Bezug auf eine Oberflächennormale des Teils der Wand, wobei der zweite Einfallswinkel zwischen 85° und 90° liegt,
wobei die dritte Lichtquelle (320) in Bezug auf den Behälter (303) so angeordnet ist, dass der dritte Strahl von einfallendem Licht unter einem dritten Einfallswinkel auf den Teil der Wand des Behälters (303) eintrifft, gemessen in Bezug auf eine Oberflächennormale des Teils der Wand, wobei der dritte Einfallswinkel höchstens 10° beträgt, vorzugsweise höchstens 5°, wobei der dritte Strahl von einfallendem Licht kohärentes Licht ist,
wobei der erste optische Sensor (130) so angeordnet ist, dass er dazu ausgestaltet ist, einen ersten Strahl von reflektiertem/gestreutem Licht von der Wand des Behälters zu empfangen, wobei sich ein erster Strahl von reflektiertem/gestreutem Licht zumindest ungefähr in einer ersten Richtung bewegt, die einer Richtung des ersten Strahls von einfallendem Licht entgegengesetzt ist,
wobei der zweite optische Sensor (230) so angeordnet ist, dass er dazu ausgestaltet ist, einen zweiten Strahl von reflektiertem/gestreutem Licht von der Wand des Behälters (203) unter einem Erkennungswinkel zu empfangen, gemessen in Bezug auf eine Oberflächennormale des Teils der Wand, wobei der Erkennungswinkel höchstens 5° oder höchstens 10° beträgt, und
wobei der dritte optische Sensor (330) so angeordnet ist, dass er dazu ausgestaltet ist, ein Interferenzmuster von reflektiertem/gestreutem Licht von der Wand des Behälters (303) zu detektieren, insbesondere von einer äußeren Wandoberfläche und einer inneren Wandoberfläche.

2. Einrichtung (100) nach Anspruch 1, wobei jeder des ersten Strahls von einfallendem Licht, des zweiten Strahls von einfallendem Licht und des dritten Strahls von einfallendem Licht eine jeweilige Wellenlänge aufweist, die sich von den beiden anderen unterscheidet.

3. Einrichtung (100) nach Anspruch 1 oder 2, wobei eine untere Grenze des ersten Einfallswinkels $\theta_{in}$ gemäß der nachstehenden Gleichung erhalten wird:

$$sin\,\theta_{in} = \frac{n_c}{n_m}\sqrt{1 - cos^2\theta_c}$$

wobei $n_c$ ein Brechungsindex der Behälterwand ist, wobei $n_m$ ein Brechungsindex eines Mediums ist, in das die Behälterwand (103) eingetaucht ist, und wobei $\theta_c$ ein innerer Einfallswinkel des ersten Strahls von einfallendem Licht innerhalb der Wand des Behälters ist, wobei der erste Einfallswinkel $\theta_{in}$ höchstens 90° beträgt.

4. Einrichtung (100) nach einem der vorhergehenden Ansprüche, wobei die erste Lichtquelle (120) und der erste optische Sensor (130) in unmittelbarer Nähe zueinander angeordnet sind und wobei die Richtung des ersten Strahls von einfallendem Licht und des ersten Strahls von reflektiertem/gestreutem Licht einen Winkel von höchstens 20°, höchstens 10° oder höchstens 5° einschließen.

5. Einrichtung (100) nach einem der vorhergehenden Ansprüche, wobei ein Durchmesser eines Flecks des ersten Strahls von einfallendem Licht auf dem Teil der Wand mindestens 1 cm ist.

6. Einrichtung (200) nach einem der vorhergehenden Ansprüche, wobei eine Mitte eines Sichtfelds des zweiten optischen Sensors (230) von der Mitte des beleuchteten Teils der Wand des Behälters um einen Abstand weg von der Rotationsachse (211) versetzt ist, der im Bereich zwischen 1 mm und 3 mm liegt, einschließlich der unteren Grenze von 1 mm und der oberen Grenze von 3 mm.

7. Einrichtung (200) nach einem der vorhergehenden Ansprüche, wobei eine Divergenz des zweiten Strahls von einfallendem Licht kleiner als 5° ist und/oder die Fleckgröße des zweiten Strahls von einfallendem Licht auf dem Teil der Wand des Behälters (203) kleiner als 5 mm, vorzugsweise kleiner als 2 mm, ist.

8. Einrichtung (300) nach einem der vorhergehenden Ansprüche, ferner umfassend eine Schirmplatte (340) zur Projektion des Interferenzmusters auf die Schirmplatte (340), wobei der dritte optische Sensor (330) dazu ausgestaltet ist, das projizierte Interferenzmuster zu detektieren und/oder wobei ein linearer Polarisator (305) vor dem dritten optischen Sensor (330) angeordnet ist, so dass das reflektierte/gestreute Licht durch den Polarisator (305) hindurchtritt.

9. Einrichtung (300) nach einem der vorhergehenden Ansprüche, ferner umfassend ein Bildverarbeitungssystem, das dazu ausgestaltet ist, ein vom dritten optischen Sensor (330) erzeugtes elektronisches Signal zu verarbeiten, um zu bestimmen, ob ein Defekt in der Wand des Behälters (303) vorhanden oder nicht vorhanden ist, wobei insbesondere ein Defekt durch die Detektion einer Störung oder eines Verlusts des Interferenzmusters detektiert wird.

10. Einrichtung (200, 300) nach einem der vorhergehenden Ansprüche, wobei ein optisches Bandpassfilter (208, 308) vor dem zweiten oder dritten optischen Sensor (230, 330) angeordnet ist, insbesondere zwischen dem Behälter (203, 303) und einem vor dem zweiten oder dritten optischen Sensor (230, 330) angeordneten Linsensystem, wobei das Bandpassfilter (208, 308) Licht mit einer Wellenlänge des zweiten oder dritten Strahls von einfallendem Licht durch das Bandpassfilter (208, 308) durchlässt.

11. Einrichtung (100, 200) nach einem der vorhergehenden Ansprüche, wobei der Strahl von einfallendem Licht durch einen ersten Polarisator (104, 204) hindurchtritt und das von dem Teil der Wand reflektierte/gestreute Licht durch einen zweiten Polarisator (105, 205) hindurchtritt, wobei der zweite Polarisator (105, 205) eine Polarisationsachse aufweist, die orthogonal zur Polarisationsachse des ersten Polarisators (104, 204) ausgerichtet ist.

12. Einrichtung (100, 200) nach einem der vorhergehenden Ansprüche, ferner umfassend ein Abbildungslinsensystem zum Sammeln des von der Wand des Behälters reflektierten/gestreuten Lichts auf den ersten oder zweiten optischen Sensor (130, 230), wobei das Abbildungslinsensystem optional eine Blendenzahl größer als 5 aufweist.

13. Einrichtung (100, 200) nach einem der vorhergehenden Ansprüche, ferner umfassend ein Bildverarbeitungssystem, das dazu ausgestaltet ist, ein vom ersten oder zweiten optischen Sensor (130, 230) erzeugtes elektronisches Signal als Reaktion auf das vom ersten oder zweiten optischen Sensor (130, 230) detektierte Licht zu verarbeiten, um zu bestimmen, ob ein Defekt in der Wand des Behälters (103, 203) vorhanden oder nicht vorhanden ist, und/oder wobei die erste oder zweite Lichtquelle (120, 220) eine kollimierte Lichtquelle und/oder ein Laser ist, insbesondere ein Laser mit einem Kollimator.

14. Einrichtung (100, 200, 300) nach einem der vorhergehenden Ansprüche, wobei die erste Lichtquelle, die zweite Lichtquelle oder die dritte Lichtquelle (120, 220, 320) und/oder der erste optische Sensor, der zweite optische Sensor oder der dritte optische Sensor (130, 230, 330) an einer festen Position angeordnet sind und/oder wobei ein optisches Element, wie eine Linse, insbesondere eine konvexe Linse oder eine Zylinderlinse, oder ein Schlitz, vor der ersten, zweiten oder dritten Lichtquelle (120, 220, 320) angeordnet ist, um die Fleckgröße des Strahls von einfallendem Licht auf eine vorbestimmte Fleckgröße zu formen.

15. Einrichtung (100, 200, 300) nach einem der vorhergehenden Ansprüche, wobei der erste, der zweite oder der dritte Strahl von einfallendem Licht entlang der Rotationsachse (111, 211, 311) verlängert ist.

## Revendications

1. Appareil (100, 200, 300) d'examen d'un récipient (103, 203, 303), en particulier pour la détection de défauts dans une paroi du récipient (103, 203, 303), l'appareil (100, 200, 300) comprenant :

   un support pour soutenir au moins un récipient (103, 203, 303), lequel présente une paroi qui est au moins partiellement optiquement transparente, dans lequel le récipient (103, 203, 303) est rotatif autour d'un axe de rotation (111, 211, 311) lorsque le récipient (103, 203, 303) est soutenu par le support,
   une première source de lumière (120), une deuxième source de lumière (220) et une troisième source de lumière (320) configurées pour diriger respectivement un premier faisceau de lumière incidente, un deuxième faisceau de lumière incidente et un troisième faisceau de lumière incidente pour éclairer une partie de la paroi du récipient (103, 203, 303),
   un premier capteur optique (130), un deuxième capteur optique (230) et un troisième capteur optique (330) configurés pour recevoir un faisceau de lumière réfléchie/diffusée provenant de la paroi du récipient (103, 203, 303),
   dans lequel la première source de lumière (120) est disposée par rapport au récipient (103) de telle sorte que le premier faisceau de lumière incidente soit incident sur la partie de la paroi selon un premier angle d'incidence $\theta_{in}$, mesuré par rapport à une normale à la surface sur la partie de la paroi, dans lequel le premier angle d'incidence est d'au moins approximativement 90°, dans lequel optionnellement le premier angle d'incidence est compris entre 75° et 90° ou entre 60° et 90°, ou entre 59° et 90°,
   dans lequel la deuxième source de lumière (220) est disposée par rapport au récipient (203) de telle sorte que le deuxième faisceau de lumière incidente soit incident sur la partie de la paroi selon un deuxième angle d'incidence, mesuré par rapport à une normale à la surface sur la partie de la paroi, dans lequel le deuxième angle d'incidence est compris entre 85° et 90°, dans lequel la troisième source de lumière (320) est disposée par rapport au récipient (303) de telle sorte que le troisième faisceau de lumière incidente soit incident sur la partie de la paroi du récipient (303) selon un troisième angle d'incidence, mesuré par rapport à une normale à la surface sur la partie de la paroi, dans lequel le troisième angle d'incidence est d'au plus 10°, de préférence d'au plus 5°, dans lequel le troisième faisceau de lumière incidente est une lumière cohérente,
   dans lequel le premier capteur optique (130) est disposé de telle sorte qu'il est configuré pour recevoir un premier faisceau de lumière réfléchie/diffusée provenant de la paroi du récipient, dans lequel un premier faisceau de lumière réfléchie/diffusée se propage au moins approximativement dans une première direction, laquelle est opposée à une direction du premier faisceau de lumière incidente,
   dans lequel le deuxième capteur optique (230) est disposé de telle sorte qu'il est configuré pour recevoir un deuxième faisceau de lumière réfléchie/diffusée provenant de la paroi du récipient (203), selon un angle de détection, mesuré par rapport à une normale à la surface sur la partie de la paroi, dans lequel l'angle de détection est d'au plus 5° ou d'au plus 10°, et
   dans lequel le troisième capteur optique (330) est disposé de telle sorte qu'il est configuré pour détecter une figure d'interférence de la lumière réfléchie/diffusée provenant de la paroi du récipient (303), en particulier provenant d'une surface de paroi externe et d'une surface de paroi interne.

2. Appareil (100) selon la revendication 1, dans lequel chacun du premier faisceau de lumière incidente, du deuxième faisceau de lumière incidente et du troisième faisceau de lumière incidente présente une longueur d'onde respective qui est différente des deux autres.

3. Appareil (100) selon la revendication 1 ou 2, dans lequel une limite inférieure du premier angle d'incidence $\theta_{in}$ est obtenue selon l'équation suivante :

$$sin\,\theta_{in} = \frac{n_c}{n_m}\sqrt{1 - cos^2\theta_c}$$

dans lequel $n_c$ est un indice de réfraction de la paroi du récipient, dans lequel $n_m$ est un indice de réfraction d'un milieu dans lequel la paroi du récipient (103) est immergée, et dans lequel $\theta_c$ est un angle d'incidence interne du premier faisceau de lumière incidente à l'intérieur de la paroi du récipient, dans lequel le premier angle d'incidence $\theta_{in}$ est d'au plus 90°.

4. Appareil (100) selon l'une quelconque des revendications précédentes, dans lequel la première source de lumière (120) et le premier capteur optique (130) sont disposés à proximité immédiate l'un de l'autre et dans lequel la direction du premier faisceau de lumière incidente et le premier faisceau de lumière réfléchie/diffusée enferment un angle d'au plus 20°, d'au plus 10° ou d'au plus 5°.

5. Appareil (100) selon l'une quelconque des revendications précédentes, dans lequel un diamètre d'un spot du premier faisceau de lumière incidente sur la partie de la paroi est supérieur ou égal à 1 cm.

6. Appareil (200) selon l'une quelconque des revendications précédentes, dans lequel un centre d'un champ de vision du deuxième capteur optique (230) est décalé par rapport au centre de la partie éclairée de la paroi du récipient en s'éloignant de l'axe de rotation (211) d'une distance comprise dans la plage entre 1 mm et 3 mm, incluant la limite inférieure de 1 mm et la limite supérieure de 3 mm.

7. Appareil (200) selon l'une quelconque des revendications précédentes, dans lequel une divergence du deuxième faisceau de lumière incidente est inférieure à 5° et/ou une taille de spot du deuxième faisceau de lumière incidente sur la partie de la paroi du récipient (203) est inférieure à 5 mm, de préférence inférieure à 2 mm.

8. Appareil (300) selon l'une quelconque des revendications précédentes, comprenant en outre une plaque-écran (340) pour projeter la figure d'interférence sur la plaque-écran (340), dans lequel le troisième capteur optique (330) est configuré pour détecter la figure d'interférence projetée et/ou dans lequel un polariseur linéaire (305) est disposé devant le troisième capteur optique (330) de telle sorte que la lumière réfléchie/diffusée passe à travers le polariseur (305).

9. Appareil (300) selon l'une quelconque des revendications précédentes, comprenant en outre un système de traitement d'image configuré pour traiter un signal électronique généré par le troisième capteur optique (330) afin de déterminer si un défaut est présent ou absent dans la paroi du récipient (303), dans lequel, en particulier, un défaut est détecté par la détection d'une perturbation ou d'une perte de la figure d'interférence.

10. Appareil (200, 300) selon l'une quelconque des revendications précédentes, dans lequel un filtre passe-bande optique (208, 308) est positionné devant le deuxième ou le troisième capteur optique (230, 330), en particulier entre le récipient (203, 303) et un système de lentilles disposé devant le deuxième ou le troisième capteur optique (230, 330), dans lequel le filtre passe-bande (208, 308) permet à la lumière à une longueur d'onde du deuxième ou du troisième faisceau de lumière incidente de passer à travers le filtre passe-bande (208, 308).

11. Appareil (100, 200) selon l'une quelconque des revendications précédentes, dans lequel le faisceau de lumière incidente passe à travers un premier polariseur (104, 204) et la lumière réfléchie/diffusée provenant de la partie de la paroi passe à travers un deuxième polariseur (105, 205), dans lequel le deuxième polariseur (105, 205) présente un axe de polarisation qui est orienté orthogonalement à l'axe de polarisation du premier polariseur (104, 204).

12. Appareil (100, 200) selon l'une quelconque des revendications précédentes, comprenant en outre un système de lentilles d'imagerie pour collecter la lumière réfléchie/diffusée provenant de la paroi du récipient sur le premier ou le deuxième capteur optique (130, 230), dans lequel, optionnellement, le système de lentilles d'imagerie présente un nombre F supérieur à 5.

13. Appareil (100, 200) selon l'une quelconque des revendications précédentes, comprenant en outre un système de traitement d'image configuré pour traiter un signal électronique généré par le premier ou le deuxième capteur optique (130, 230) en réponse à la lumière détectée par le premier ou le deuxième capteur optique (130, 230) afin de déterminer si un défaut est présent ou absent dans la paroi du récipient (103, 203) et/ou dans lequel la première ou la deuxième source de lumière (120, 220) est une source de lumière collimatée et/ou un laser, en particulier un laser avec un collimateur,

14. Appareil (100, 200, 300) selon l'une quelconque des revendications précédentes, dans lequel la première source de lumière, la deuxième source de lumière ou la troisième source de lumière (120, 220, 320) et/ou le premier capteur optique, le deuxième capteur optique ou le troisième capteur optique (130, 230, 330) sont disposés au niveau d'une position fixe et/ou dans lequel un élément optique, tel qu'une lentille, en particulier une lentille convexe ou une lentille cylindrique, ou une fente, est disposé devant la première, la deuxième ou la troisième source de lumière (120, 220, 320) pour former la taille de spot du faisceau de lumière incidente selon une taille de spot prédéterminée.

15. Appareil (100, 200, 300) selon l'une quelconque des revendications précédentes, dans lequel le premier, le deuxième ou le troisième faisceau de lumière incidente est allongé le long de l'axe de rotation (111, 211, 311).

Fig. 1a

Fig. 2a

Fig. 2b

Fig. 3

Fig. 4

Fig. 5a

Fig. 5b

Fig. 6

Fig. 7

Fig. 8a

Fig. 8b

Fig. 8c

Fig. 9

Fig. 10a    Fig. 10b

Fig. 11a    Fig. 11b

Fig. 12a      Fig. 12b      Fig. 13a      Fig. 13b

Fig. 14a      Fig. 14b      Fig. 15a      Fig. 15b

Fig. 16a        Fig. 16b        Fig. 17a        Fig. 17b

Fig. 18a        Fig. 18b        Fig. 19a        Fig. 19b

Fig. 20a          Fig. 20b                    Fig. 21a          Fig. 21b

Fig. 22a

Fig. 22b

Fig. 23a

Fig. 23b

Fig. 24a

Fig. 24b

Fig. 25a

Fig. 25b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 010142718 A2
- US 20050117149 A
- WO 2017134086 A1
- CA 1065436 A
- EP 1106993 B1
- KR 101324015 B1
- CN 102023164 B
- EP 0952443 A1
- US 2015293031 A1